Europäisches Patentamt

European Patent Office

Office européen des brevets

(19)

(11) **EP 0 732 636 B1**

(12) **FASCICULE DE BREVET EUROPEEN**

(45) Date de publication et mention
de la délivrance du brevet:
**28.06.2000   Bulletin 2000/26**

(51) Int Cl.[7]: **G05B 13/04**, G05B 11/42

(21) Numéro de dépôt: **96400487.3**

(22) Date de dépôt: **08.03.1996**

(54) **Procédé de régulation d'une installation à comportement non linéaire, notamment d'un four à arc électrique à l'aide d'un régulateur de type proportionnel-intégral adaptatif**

Methode zur Regelung einer Anlage mit nichtlinearen Eigenschaften, insbesondere eines Lichtbogenofens mit Hilfe eines adaptiven proportional-integralen Reglers

Method for controlling an installation having a non-linear behaviour and particularly an electrical arc using an adaptive controller of the proportional-integral type

(84) Etats contractants désignés:
**AT BE CH DE DK ES FI FR GB GR IE IT LI LU NL PT SE**

(30) Priorité: **14.03.1995  FR 9502917**

(43) Date de publication de la demande:
**18.09.1996   Bulletin 1996/38**

(73) Titulaires:
• **ASCOMETAL (Société anonyme)**
  **F-92800 Puteaux (FR)**
• **SPIE TRINDEL, S.A.**
  **F-95863 Cergy Pontoise (FR)**

(72) Inventeurs:
• **Mouchette, Alain**
  **F-57210 Semecourt (FR)**

• **Weber, Dominique**
  **F-57110 Kuntzig (FR)**
• **Demerle, Martial**
  **F-92130 Issy Les Moulineaux (FR)**

(74) Mandataire: **Ventavoli, Roger**
  **TECHMETAL PROMOTION (Groupe USINOR),**
  **Immeuble " La Pacific "**
  **11/13 Cours Valmy**
  **La Défense 7,**
  **TSA 10001**
  **92070 Paris La Défense Cédex (FR)**

(56) Documents cités:
  **WO-A-93/09481          DE-A- 3 911 186**

## Description

La présente invention est relative à un procédé pour adapter un régulateur de type proportionnel-intégral adaptatif à la régulation du fonctionnement d'installations à comportement non linéaire, en particulier de fours métallurgiques à arc électrique.

Il est connu de réguler le fonctionnement d'installations à comportement linéaire, par exemple de fours électriques à résistance, à l'aide de régulateurs de type Proportionnel-Intégral adaptatifs, appelés par la suite "régulateurs PI adaptatifs".

Les régulateurs de type Proportionnel-Intégral-Dérivé adaptatifs font évidemment partie de la famille des régulateurs PI adaptatifs.

Le réglage de ce type de régulateur PI adaptatif est basé sur deux paramètres prédéterminés de régulation : un paramètre de proportionnalité appelé p et un paramètre d'intégration appelé i.

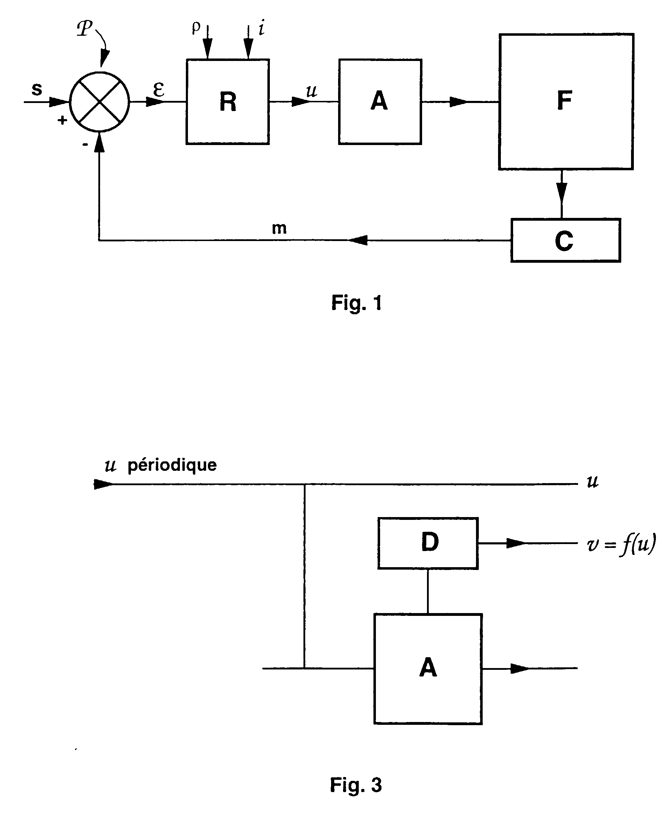

Une boucle de régulation comprend, d'une manière classique et comme représenté à la figure 1, un régulateur R, un actionneur A, l'installation F à réguler proprement dite, et un capteur C pour mesurer des grandeurs caractéristiques du fonctionnement réel de l'installation F, la boucle étant fermée par un comparateur P.

Pour réguler l'installation autour d'un point de fonctionnement prédéterminé, on procède d'une manière classique comme suit :

- on applique au comparateur P une consigne s correspondant audit point de fonctionnement prédéterminé de l'installation F ;
- le comparateur P reçoit par ailleurs du capteur C une mesure m d'une grandeur caractéristique du fonctionnement réel de l'installation F ;
- par comparaison entre la consigne s et la mesure m, le comparateur évalue l'écart entre le point de fonctionnement prédéterminé et le point de fonctionnement réel et en déduit un signal de correction ε à envoyer au régulateur R ;
- le régulateur R qui reçoit ledit signal de correction ε évalue le signal de commande u à envoyer à l'actionneur A ;
- l'actionneur A soumis au signal de commande u déplace le point de fonctionnement de l'installation F, déplacement qui est repéré par le capteur C sous la forme d'une nouvelle mesure m' envoyée au comparateur P.

Lorsque le régulateur R est de type PI adaptatif, les valeurs p et i des deux paramètres du régulateur PI adaptatif sont généralement prédéterminées une fois pour toutes par des procédures connues en elles-mêmes avant la mise en marche de l'installation.

Ainsi, lorsqu'on règle le régulateur R selon ces valeurs p et i et qu'on fait fonctionner la boucle de régulation, l'installation F est toujours régulée d'une manière satisfaisante.

Le document DE 39 11 186 décrit un processus de réglage d'un régulateur de type Proportionnel-Intégral adaptatif à fin d'assurer des réponses également satisfaisantes du système lors d'un changement du consigne et d'une perturbation.

Mais lorsqu'on utilise ces procédures connues et ce type de régulateur PI adaptatif dans une boucle de régulation comprenant un actionneur A et/ou une installation F dont le comportement n'est pas linéaire, il n'est pas possible de prédéterminer des valeurs fixes p et i des paramètres du régulateur PI adaptatif qui permettent une régulation satisfaisante de l'installation F quelle que soit la consigne de régulation souhaitée.

L'invention a pour but d'adapter automatiquement le réglage d'un régulateur PI adaptatif dans une boucle de régulation comprenant un actionneur et/ou une installation dont le comportement n'est pas linéaire.

L'invention a pour objet un procédé de régulation d'une installation à comportement non linéaire, notamment d'un four à arc électrique, à l'aide d'un régulateur de type Proportionnel-Intégral faisant partie d'une boucle de régulation, caractérisé en ce qu'on règle les valeurs du paramètre de proportionnalité p° et du paramètre d'intégration i° du régulateur comme suit :

1)- pour une série prédéterminée de jeux (p, i) de réglages possibles du régulateur, on simule par des moyens de calcul le fonctionnement de la boucle de régulation au voisinage d'un point prédéterminé de consigne s de régulation, pour repérer le temps de réponse X1 et l'amplitude X2 du premier dépassement de consigne après une variation de consigne Δs, et pour repérer l'efficacité X3 du régulateur pour éliminer une perturbation et la sollicitation X4 de l'actionneur lors d'une perturbation aléatoire de l'installation,

2)- on calcule une fonction d'optimisation F = a1.|X1|+ a2.|X2|+ a3.|X3| + a4.|X4|, où a1, a2, a3, a4 sont des facteurs de pondération de critères prédéterminés de régulation, et on retient comme valeurs de réglage du régulateur le jeu (p°, i°) qui correspond au minimum de cette fonction.

Selon une caractéristique avantageuse de l'invention, la boucle de régulation comprend, outre l'installation et ledit régulateur, un capteur pour mesurer une grandeur m caractéristique du fonctionnement de ladite installation et un actionneur pour conduire ledit fonctionnement à partir d'un signal de commande u, et on simule le fonctionnement de la boucle de régulation selon les séquences suivantes :

a)- pour un premier réglage du régulateur basé sur un jeu quelconque $(p_1, i_1)$ appartenant à ladite série de réglages,

- dans une première étape de simulation, on applique à ladite boucle une variation prédéterminée de consigne Δs et on mesure le temps de réponse X1 à ladite variation de consigne Δs et l'amplitude X2 du premier dépassement de la nouvelle consigne s + Δs,

- - dans une deuxième étape de simulation, on applique une perturbation aléatoire q à ladite installation, et on mesure l'écart quadratique moyen X3 de la mesure m dudit capteur (qui représente l'efficacité de l'élimination de la perturbation par le régulateur) et l'écart quadratique moyen X4 du signal de commande u de l'actionneur (qui représente la sollicitation de l'actionneur).

b)- on réitère lesdites étapes de simulation et de mesure pour tous les autres jeux $(p_n, i_n)$ de ladite série de jeux de réglages du régulateur.

La fonction d'optimisation s'exprime alors sous la forme $F(p_n, i_n) = a1.|X1_n| + a2.|X2_n| + a3.|X3_n| + a4.|X4_n|$ en reprenant les mesures $(X1_n, X2_n, X3_n, X4_n)$ correspondant à chacun des jeux $(p_n, i_n)$ de ladite série de réglages du régulateur.

Selon une autre caractéristique avantageuse de l'invention, lesdits facteurs de pondération a1, a2, a3, a4 sont normés et correspondent à l'importance que l'on souhaite accorder aux performances ou critères de régulation suivants :

- pour a1 : le temps de réponse,
- pour a2 : l'amplitude du premier dépassement de consigne,
- pour a3 : l'élimination des perturbations par le régulateur,
- pour a4 : l'importance des sollicitations de l'actionneur lors d'une perturbation,

Lorsqu'on change le point de fonctionnement de l'installation, c'est à dire la consigne s de régulation, l'ensemble de la procédure doit être reprise ; ainsi, les valeurs d'optimisation de réglage (p°, i°) dépendent de la consigne s, ce qui peut se traduire en les notant : $(p°_s, i°_s)$.

Selon une variante de l'invention, on mémorise les valeurs d'optimisation de réglage $(p°_s, i°_s)$ associées à toutes les valeurs de consigne s que l'on est susceptible de rencontrer pour une campagne de fonctionnement de l'installation et calculées selon l'invention, de telle sorte que l'on connaît par avance le réglage du régulateur à effectuer selon le point de fonctionnement de l'installation.

Lorsqu'on choisit de nouveaux critères d'optimisation du réglage du régulateur, c'est à dire de nouveaux facteurs de pondération a'1, a'2, a'3, a'4, il est nécessaire de recalculer la fonction $F(p_n, i_n)$ pour toutes les mesures $(X1_n, X2_n, X3_n, X4_n)$, correspondant aux couples $(p_n, i_n)$ et de rechercher les nouvelles valeurs d'optimisation de réglage $(p'°_s, i'°_s)$.

Avantageusement, selon une autre variante de l'invention, on mémorise donc toutes les mesures $(X1_n, X2_n, X3_n, X4_n)$, correspondant aux couples $(p_n, i_n)$ en vue de recalculer plus rapidement les nouvelles valeurs d'optimisation de réglage $(p'°_s, i'°_s)$ à partir de nouveaux critères d'optimisation.

L'invention s'applique notamment aux installations comme des fours métallurgiques à arc électrique à courant alternatif dotés d'une manière classique d'électrodes et pilotés par des moyens de déplacement de ces électrodes, ces moyens servant d'actionneur dans la boucle de régulation.

Dans ce cas particulier d'application de l'invention, pour définir lesdits moyens de calcul à l'aide des théories de l'automatique linéaire, on simule avantageusement le comportement de l'actionneur par une fonction modèle déterminée comme suit :

1)- on applique à l'actionneur A un signal de commande u périodique de très basse fréquence et on mesure la vitesse de déplacement v desdites électrodes ;

2)- à partir de la fonction expérimentale v = f(u) caractéristique de l'actionneur, on détermine une fonction modèle générique, d'expressions algébriques linéaires, capable de représenter ladite fonction caractéristique et déterminée par la valeur d'une série de paramètres ;

3)- on détermine la valeur des paramètres de cette fonction modèle par calage de la fonction modèle sur la fonction caractéristique.

L'invention sera mieux comprise à la lecture de la description qui va suivre, donnée à titre d'exemple, et en référence aux figures annexées sur lesquelles :

- la figure 1 représente le schéma général d'une boucle de régulation comprenant un régulateur dont le réglage des paramètres p et i peut être adapté selon l'invention ;
- la figure 2 représente l'allure des variations de la résistance d'arc électrique r en fonction de la hauteur h d'arc électrique dans un four à arc ;
- la figure 3 représente le schéma à appliquer pour repérer la fonction caractéristique de l'actionneur A de la boucle de régulation ;
- la figure 4 représente l'allure de cette fonction caractéristique et les paramètres déterminant la fonction modèle correspondante d'un actionneur constitué par des moyens de déplacement des électrodes d'un four à arc ;
- la figure 5 représente une boucle de régulation comprenant un four à arc comme installation F à réguler sur la base d'une consigne de résistance d'arc r°, des moyens de déplacement des électrodes du four comme actionneur A, et un capteur C de mesure de résistance r d'arc ;
- la figure 6 représente le schéma de simulation de la boucle de régulation et l'évaluation de la résistance d'arc r en fonction du temps, lorsqu'on applique une variation $\Delta$ r° de consigne de régulation dans la première étape de simulation du procédé selon l'invention ;

- la figure 7 représente le schéma de simulation de la boucle de régulation, lorsqu'on applique une perturbation aléatoire q de fonctionnement de l'installation F dans la deuxième étape de simulation du procédé selon l'invention ;

- la figure 8 représente la boucle de régulation dotée de moyens de calcul et de programmation adaptés pour la mise en oeuvre automatique du procédé de régulation selon l'invention.

- la figure 9 représente la boucle de régulation dotée d'un dispositif complet d'auto-réglage du régulateur PI adaptatif.

L'installation à réguler est un four métallurgique à arc électrique à courant alternatif comportant une cuve métallurgique revêtue intérieurement de réfractaires et coiffée par une voûte, des électrodes traversant la voûte, des moyens d'alimentation électrique pour créer un arc électrique entre le métal contenu dans la cuve et une extrémité des électrodes, et des moyens de déplacement de ces électrodes qui permettent de faire varier la hauteur de l'arc électrique.

En se reportant par exemple au brevet FR 2 547 478, on sait que le fonctionnement d'une telle installation peut être caractérisé par la tension U et l'intensité électriques I de l'arc électrique.

Le fonctionnement de l'installation peut donc être représenté par un point dit de fonctionnement dans le diagramme tension-intensité de l'arc électrique.

Sur ce diagramme tension-intensité, on peut faire figurer des courbes dites "iso-puissance" correspondant à une puissance d'arc U . I constante et des courbes dites "iso-résistance" correspondant à une résistance d'arc r = U / I constante.

Les moyens d'alimentation électrique sont conçus pour assurer par eux-mêmes une régulation dite de puissance qui ne fait pas partie de la présente invention, de telle sorte que tous les points possibles de fonctionnement de l'installation appartiennent à une même courbe "iso-puissance" prédéterminée.

La boucle de régulation objet de la présente invention concerne la régulation dite de résistance et les déplacements du point de fonctionnement relatifs à l'action de cette régulation de résistance appartiennent donc à une même courbe iso-résistance.

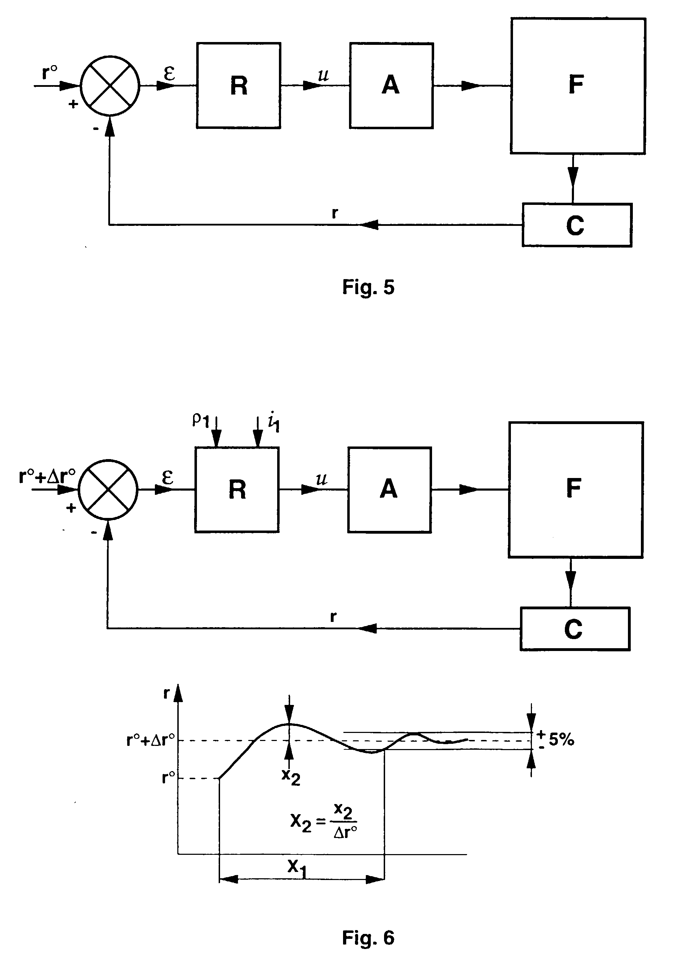

Comme représenté à la figure 5, la boucle de régulation objet de la présente invention comprend un régulateur R, un actionneur A constitué par les moyens de déplacement des électrodes, l'installation F constituée par le four à arc, et un capteur C pour mesurer la résistance r de l'arc électrique (à partir de la tension U et de l'intensité I de l'arc électrique).

Le régulateur R est de type proportionnel-intégral adaptatif et comporte deux réglages indépendant, l'un p de proportionnalité, l'autre i d'intégration.

Les moyens de déplacement sont commandés par un signal de commande u envoyé par le régulateur R et entraînent le déplacement des électrodes à une vitesse v qui est fonction du signal de commande u.

Ces moyens de déplacement des électrodes sont dotés de capteurs D de mesure de la position des électrodes implantés à proximité de la cuve métallurgique du four à arc.

Le four à arc et le capteur C sont connus en eux-mêmes. Pour mettre en oeuvre le procédé de régulation selon l'invention, il est nécessaire au préalable de pouvoir simuler par des moyens de calcul le fonctionnement de la boucle de régulation.

D'une manière classique, ces moyens de calcul se basent sur les fonctions de transfert des composants de la boucle de régulation, c'est à dire du régulateur R, de l'actionneur A, de l'installation F, du capteur C.

On sait d'une manière connue en elle-même calculer les fonctions de transfert du régulateur R et du capteur C, qui ont des comportements linéaires.

Mais comme par ailleurs le comportement de l'actionneur A et du four F n'est pas linéaire, il n'est pas possible de déterminer lesdits moyens de calcul en appliquant les théories classiques de l'automatique linéaire.

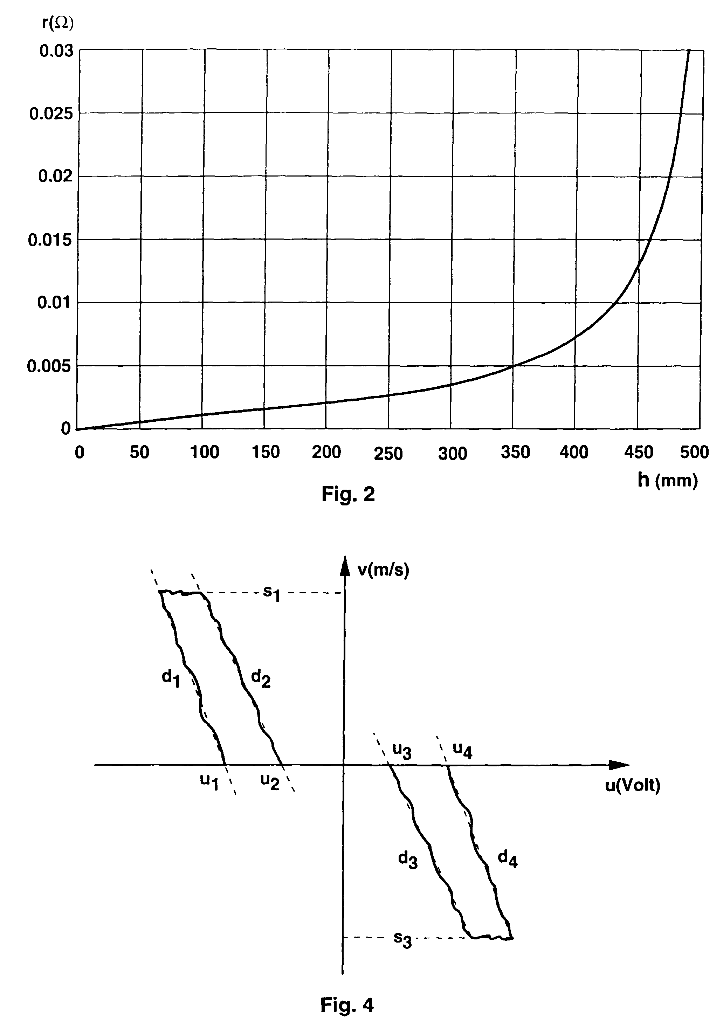

Le comportement non linéaire du four métallurgique à arc électrique qui constitue l'installation F à réguler peut être représenté d'une manière classique sur un diagramme représenté à la figure 2 comportant la hauteur de l'arc électrique h en abscisse et la résistance r de l'arc électrique en ordonnée.

La résistance r de l'arc est mesurée par le capteur C.

Selon cette représentation, on constate que la non linéarité du comportement du four à arc est très prononcée vers les hauteurs d'arc élevées, qui correspond au domaine privilégié d'application de l'invention.

En utilisant le modèle dit de Cassie concernant l'expression de la résistance d'arc électrique en fonction de sa hauteur, on a exprimé algébriquement le comportement du four à arc selon la formule :

$$r = g \cdot Xcc \cdot h / (U^2/3 - h^2)^{0,5} \, ,$$

où $g = b1 / (1 - h \sqrt{3} /U) + b2$, et où Xcc représente la réactance de court-circuit du four électrique et U la tension d'alimentation à vide.

Les valeurs des paramètres b1 et b2 sont déterminées expérimentalement par calage de cette expression algébrique sur des données expérimentales.

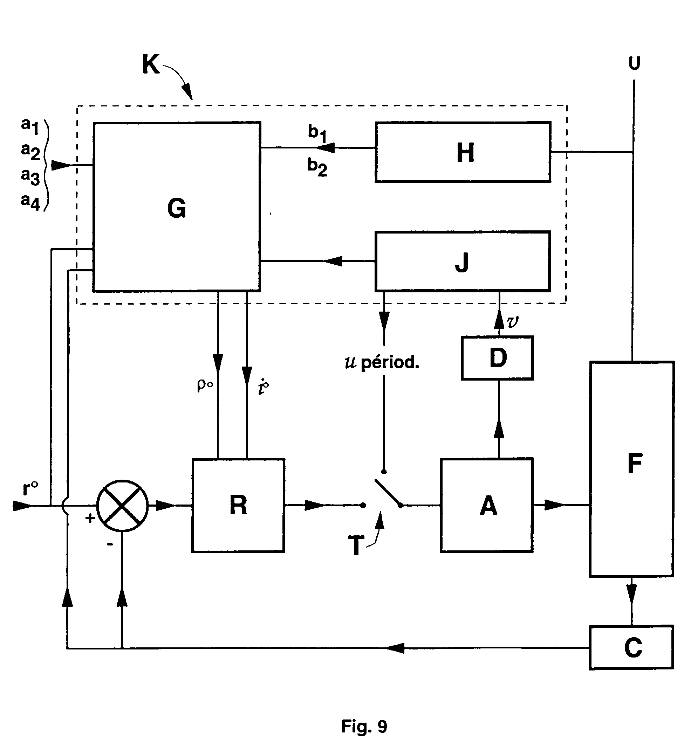

Ce calage peut être réalisé par un dispositif de calage connu en lui-même, référencé H sur la figure 9.

Ainsi, grâce à cette expression algébrique avantageuse du comportement du four à arc, le comportement non linéaire de l'installation F ne s'oppose plus alors à l'utilisation des théories classiques de l'automatique linéaire pour simuler le fonctionnement de la boucle de régulation, notamment lorsqu'on fait fonctionner le four à arc avec des hauteurs d'arc élevées.

Afin de déterminer les moyens de calcul nécessaires pour simuler la boucle de régulation et pour mettre en oeuvre l'invention, la cuve métallurgique du four étant vide avant le début d'opérations métallurgiques, on procède à l'étape préalable suivante, schématisée en partie à la figure 3 :

- on applique à l'actionneur A un signal de commande u périodique de très basse fréquence et on mesure, à l'aide des capteurs D, la position des électrodes de laquelle on déduit leur vitesse de déplacement v ;
- à partir de la fonction expérimentale caractéristique de l'actionneur, qui s'exprime sous la forme v = f(u) et n'est pas linéaire, on détermine une fonction modèle générique, d'expressions algébriques linéaires, capable de représenter ladite fonction caractéristique et déterminée par la valeur d'une série de paramètres ;
- on détermine la valeur des paramètres de cette fonction modèle par calage de la fonction modèle sur la fonction caractéristique, selon une méthode connue en elle-même ;

Ces opérations de l'étape préalable peuvent être réalisées par un dispositif automatique d'identification, référencé J sur la figure 9.

Le comportement non linéaire de l'actionneur A peut alors être représenté par cette fonction modèle et ne s'oppose plus alors à l'utilisation des théories classiques de l'automatique linéaire pour simuler le fonctionnement de la boucle de régulation.

Cette étape préalable sert donc à modéliser le comportement dit "statique" de l'actionneur A à l'aide d'une méthode d'analyse harmonique qui n'est utilisée d'une manière classique que pour modéliser des comportements dynamiques.

Lorsque les moyens de déplacement des électrodes qui constituent l'actionneur A comprennent d'une manière classique essentiellement des vérins hydrauliques commandés par des électrovannes, on a constaté que la fonction caractéristique f(u) présentait les caractéristiques suivantes lorsqu'on la représente sur le diagramme représenté à la figure 4 comportant le signal de commande u en abscisse et la vitesse v en ordonnée, pour une période de variation du signal de commande :

- deux parties approximativement linéaires, l'une dans le domaine des vitesses négatives, l'autre dans le domaine des vitesses positives, séparées par une bande morte correspondant à une vitesse v nulle pour un signal de commande non nul.
- par suite d'hystérésis du comportement de l'actionneur, chaque partie linéaire est dédoublée en deux parties approximativement linéaires et la fonction caractéristique comprend donc quatre parties linéaires.
- un palier de saturation de vitesse positive si et de saturation de vitesse négative s3.

Dans ce cas particulier, les paramètres qui déterminent la fonction modèle correspondant à cette fonction caractéristique comprennent les pentes d1, d2, d3, d4, les positions d'intersection u1, u2, u3, u4 de ces quatre parties linéaires avec l'axe des abscisses, et les valeurs s1 et s2 de saturation de la vitesse.

Ces paramètres permettent d'évaluer la largeur et la position de la bande morte sur l'axe des abscisses, de u1 ou u2 à u3 ou u4.

Pour déterminer la valeur de ces paramètres, on procède au calage de la fonction modèle sur la fonction caractéristique ainsi représentée par une méthode connue en elle-même, par exemple :

- d'identification des points de rupture de la courbe v = f(u) pour déterminer les positions d'intersection de la courbe avec l'axe des abscisses,
- et d'optimisation de surface pour déterminer les pentes des quatre parties linéaires de cette courbe, qui représentent le gain de l'actionneur.

Le comportement de l'actionneur A peut alors être représenté par cette fonction modèle.

A la fin de cette étape préalable aux opérations métallurgiques dans le four à arc, les moyens de calcul nécessaires pour simuler la boucle de régulation et pour mettre en oeuvre de l'invention sont alors totalement déterminés en utilisant les théories classiques de l'automatique linéaire.

En vue des opérations métallurgiques, on prédétermine un point de fonctionnement du four repéré par une résistance d'arc électrique r° qui constitue la consigne de régulation du four.

D'une manière classique et en se reportant à la figure 5, la boucle de régulation qui doit être réglée selon l'invention est prévue pour fonctionner de la manière suivante : grâce au capteur C, on mesure la résistance r de l'arc électrique dans le four, on compare la mesure r à la consigne r°, et on en déduit un signal de correction ε qu'on envoie au régulateur qui commande l'actionneur A par un signal de commande u, ledit actionneur déplaçant les électrodes pour rapprocher le fonctionnement du four du point de consigne r°.

Selon l'invention, toujours avant le démarrage des opérations métallurgiques, on procède au réglage du régulateur R en déterminant le paramètre p° de proportionnalité et le paramètre i° d'intégration de la façon suivante :

　　1)- on prédétermine une famille de jeux de réglages possibles du régulateur, chaque jeu étant repéré par un couple (p, i) où p représente la valeur du paramètre de proportionnalité et i celle du paramètre d'intégration ;

2)- on simule par les moyens de calcul précédemment déterminés le fonctionnement de la boucle de régulation au voisinage du point de fonctionnement repéré par la résistance d'arc r° ;

a)- pour un premier réglage du régulateur basé sur un couple $(p_1, i_1)$ appartenant à ladite famille,

- dans une première étape de simulation schématisée à la figure 6, on applique à ladite boucle une variation prédéterminée de consigne $\Delta r°$, c'est à dire de résistance d'arc souhaitée, et on mesure le temps de réponse X1 à ladite variation de consigne $\Delta r°$ et l'amplitude X2 du premier dépassement de la nouvelle consigne r° + $\Delta r°$ ;

En pratique, et comme représenté sur le diagramme d'évolution de la résistance r en fonction du temps de la même figure 6, le temps de réponse X1 est celui qui s'écoule entre l'application de la variation de consigne $\Delta r°$ et l'instant où la résistance r mesurée par le capteur rentre pour la première fois dans l'intervalle de tolérance de 5% situé de part et d'autre de la nouvelle consigne r° + $\Delta r°$.

En pratique, X2 est exprimé en unité relative par le rapport entre l'amplitude dudit dépassement de consigne et ladite variation de consigne $\Delta r°$ exprimés sur la même échelle.

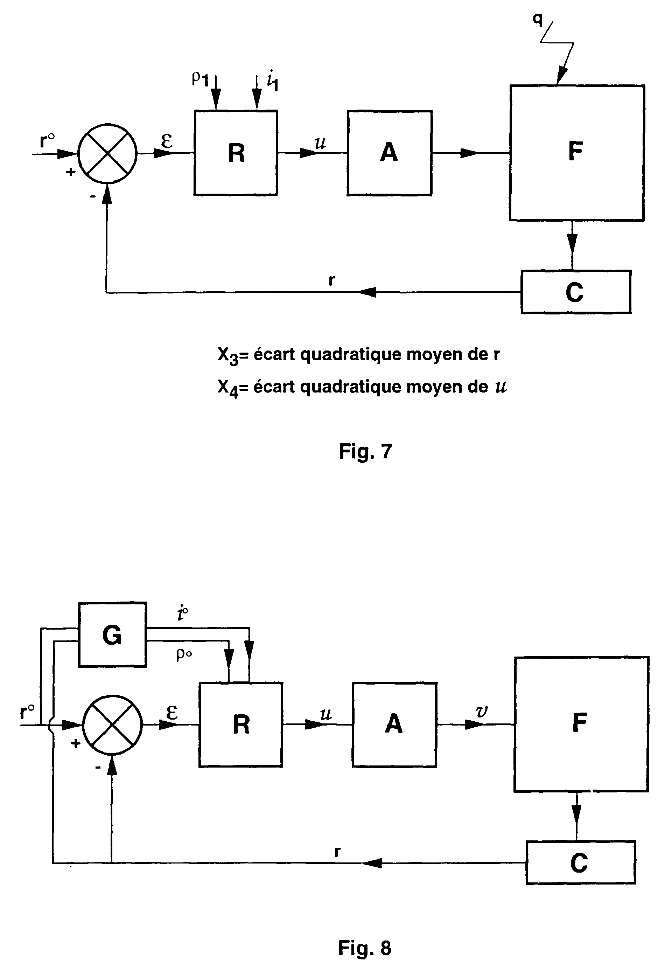

- dans une deuxième étape de simulation schématisée à la figure 7, on applique à ladite boucle une perturbation aléatoire q correspondant à un changement aléatoire de la résistance d'arc du four, et on mesure l'écart quadratique moyen X3 de la résistance r mesurée par le capteur C (qui représente l'efficacité de l'élimination de la perturbation par le régulateur) et l'écart quadratique moyen X4 du signal de commande u de l'actionneur A (qui représente la sollicitation de l'actionneur).

b)- on réitère lesdites étapes de simulation et de mesure pour tous les autres jeux $(p_n, i_n)$ de ladite famille de réglages du régulateur, toujours par simulation et en gardant la même valeur de consigne r°,

3)- on calcule une fonction dite d'optimisation $F(p_n, i_n) = a1.|X1_n| + a2.|X2_n| + a3.|X3_n| + a4.|X4_n|$ en reprenant les mesures $(X1_n, X2_n, X3_n, X4_n)$, correspondant à chacun des jeux $(p_n, i_n)$ de ladite famille de réglages du régulateur, où a1, a2, a3, a4 sont des facteurs de pondération prédéterminés et normés, qui correspondent à l'importance que l'on souhaite accorder aux performances ou critères de régulation suivants :

- pour a1 : le temps de réponse,
- pour a2 : l'amplitude du premier dépassement de consigne,
- pour a3 : l'élimination des perturbations par le régulateur,
- pour a4 : l'importance des sollicitations de l'actionneur lors d'une perturbation,

4)- on retient comme paramètres de réglage (p°, i°) du régulateur R le couple (p, i) pour lequel la fonction F présente un minimum .

La position de ce minimum est déterminée par une méthode connue en elle-même.

Sans se départir de la présente invention, d'autres expressions algébriques de fonction d'optimisation peuvent être utilisées, notamment une fonction quadratique du type : $F(p_n, i_n) = a1.X1_n^2 + a2.X2_n^2 + a3.X3_n^2 + a4.X4_n^2$.

Le régulateur PI adaptatif étant ainsi réglé selon l'invention, on procède aux opérations métallurgiques en régulant le four à arc d'une manière classique à l'aide de la boucle de régulation comportant ledit régulateur.

Ainsi, bien que l'installation F et son actionneur A n'aient pas un comportement linéaire, il est possible d'adapter automatiquement le réglage du régulateur PI à tous les points de fonctionnement possibles de l'installation F, même au cours des opérations.

Lorsqu'on change le point de fonctionnement du four, c'est à dire la résistance souhaitée r°, ou la consigne de régulation, on évalue à nouveau selon l'invention les paramètres de réglage optimum $(p°_{r°}, i°_{r°})$ du régulateur R.

En se reportant à la figure 8 et 9, les opérations d'adaptation du réglage du régulateur R précédemment décrites peuvent être avantageusement automatisées par des moyens G de calcul et de programmation appropriés.

Comme représenté à la figure 9, les moyens G de calcul, le dispositif H de calage de l'installation F et le dispositif J d'identification de l'actionneur A peuvent être avantageusement intégrés à un ensemble d'auto-réglage K du régulateur R.

En reportant toujours à cette figure 9, l'entrée de l'actionneur A est connectée par un contacteur T, soit à la sortie du dispositif d'identification J dans l'étape préalable aux opérations métallurgiques, soit à la sortie du régulateur R pendant les opérations métallurgiques.

La représentation par une fonction modèle du comportement de l'actionneur A telle qu'elle est décrite ci-dessus dans l'étape préalable aux opérations métallurgiques peut avantageusement servir également à la maintenance préventive de l'actionneur A, c'est à dire ici des moyens de déplacement des électrodes.

En effet, d'une campagne d'opérations métallurgiques à la suivante, on peut détecter dans cette étape préalable des variations des paramètres qui déterminent la fonction modèle lors de son calage sur la fonction caractéristique de l'actionneur A.

De telles variations des paramètres d'une campagne à l'autre reflètent le degré d'usure de composants de l'actionneur.

En évaluant l'usure de l'actionneur par ces variations, on peut améliorer sensiblement sa maintenance préventive.

Le procédé selon l'invention permet également la détection précoce d'un défaut sur l'actionneur.

Enfin, comme mentionné précédemment, le procédé de régulation selon l'invention appliqué aux fours électriques à arc est particulièrement avantageux lorsqu'on souhaite faire fonctionner le four avec des hauteurs d'arc élevées.

## Revendications

1. Procédé de régulation d'une installation à comportement non linéaire, notamment d'un four à arc électrique, à l'aide d'un régulateur de type Proportionnel-Intégral adaptatif faisant partie d'une boucle de régulation, caractérisé en ce qu'on règle les valeurs du paramètre de proportionnalité $p°$ et du paramètre d'intégration $i°$ du régulateur comme suit :

   1)- pour une série prédéterminée de jeux (p, i) de réglages possibles du régulateur, on simule par des moyens de calcul le fonctionnement de la boucle de régulation au voisinage d'un point prédéterminé de consigne s de régulation, pour repérer le temps de réponse X1 et l'amplitude X2 du premier dépassement de consigne après une variation de consigne $\Delta s$, et pour repérer l'efficacité X3 du régulateur pour éliminer une perturbation et la sollicitation X4 de l'actionneur lors d'une perturbation aléatoire de l'installation,

   2)- on calcule une fonction d'optimisation $F = a1.|X1|+ a2.|X2|+ a3.|X3| + a4.|X4|$, où a1, a2, a3, a4 sont des facteurs de pondération de critères prédéterminés de régulation, et on retient comme valeurs de réglage du régulateur le jeu $(p°, i°)$ qui correspond au minimum de cette fonction.

2. Procédé selon la revendication 1, caractérisé en ce que, ladite boucle de régulation comprenant, outre l'installation et ledit régulateur, un capteur pour mesurer une grandeur m caractéristique du fonctionnement de ladite installation et un actionneur pour conduire ledit fonctionnement à partir d'un signal de commande u, on simule le fonctionnement de la boucle de régulation selon les séquences suivantes :

   a)- pour un premier réglage du régulateur basé sur un jeu quelconque $(p_1, i_1)$ appartenant à ladite série de réglages,

   - dans une première étape de simulation, on applique à ladite boucle une variation prédéterminée de consigne $\Delta s$ et on mesure le temps de réponse X1 à ladite variation de consigne $\Delta s$ et l'amplitude X2 du premier dépassement de la nouvelle consigne $s + \Delta s$,
   - dans une deuxième étape de simulation, on applique une perturbation aléatoire q à ladite installation, et on mesure l'écart quadratique moyen X3 de la mesure m dudit capteur (qui représente l'efficacité de l'élimination de la perturbation par le régulateur) et l'écart quadratique moyen X4 du signal de commande u de l'actionneur (qui représente la sollicitation de l'actionneur).

   b)- on réitère lesdites étapes de simulation et de mesure pour tous les autres jeux $(p_n, i_n)$ de ladite série de jeux de réglages du régulateur, ladite fonction d'optimisation s'exprimant alors sous la forme $F(p_n, i_n) = a1.|X1_n|+ a2.|X2_n|+ a3.|X3_n| + a4.|X4_n|$ en reprenant les mesures $(X1_n, X2_n, X3_n, X4_n)$ correspondant à chacun des jeux $(p_n, i_n)$ de ladite série de réglages du régulateur.

3. Procédé selon l'une quelconque des revendications 1 ou 2 caractérisé en ce que lesdits facteurs de pondération a1, a2, a3, a4 sont normés et correspondent à l'importance que l'on souhaite accorder aux performances ou critères de régulation suivants :

   - pour a1 : le temps de réponse,
   - pour a2 : l'amplitude du premier dépassement de consigne,
   - pour a3 : l'élimination des perturbations par le régulateur,
   - pour a4 : l'importance des sollicitations de l'actionneur lors d'une perturbation.

4. Procédé selon l'une quelconque des revendications précédentes caractérisé en ce que ladite installation est un four électrique à arc comportant des électrodes et des moyens d'alimentation électrique pour créer un arc électrique à partir de l'extrémité des électrodes.

5. Procédé selon la revendication 4 caractérisé en ce que ladite boucle de régulation comprend un actionneur (A) comprenant des moyens de déplacement desdites électrodes.

6. Procédé selon la revendication 5 caractérisé en ce que, pour définir lesdits moyens de calcul à l'aide des théories de l'automatique linéaire, on simule le comportement dudit actionneur par une fonction modèle déterminée comme suit :

1)- on applique à l'actionneur (A) un signal de commande u périodique de très basse fréquence et on mesure la vitesse de déplacement v desdites électrodes ;

2)- à partir de la fonction expérimentale v = f(u) caractéristique de l'actionneur (A), on détermine une fonction modèle générique, d'expressions algébriques linéaires, capable de représenter ladite fonction caractéristique et déterminée par la valeur d'une série de paramètres ;

3)- on détermine la valeur des paramètres de cette fonction modèle par calage de la fonction modèle sur la fonction caractéristique.

**Patentansprüche**

1. Verfahren zur Regelung einer Anlage mit nichtlinearem Verhalten, insbesondere eines Lichtbogenofens, mit Hilfe eines adaptiven proportional-integralen Reglers, der Teil einer Regelschleife ist, dadurch gekennzeichnet, dass die Werte des Proportionalparameters $p°$ und des Integrationsparameters $i°$ des Reglers wie folgt geregelt werden:

1) - für eine vorgegebene Reihe von möglichen Regelungssätzen (p, i) des Reglers wird durch eine Rechenanordnung der Betrieb der Regelschleife in der Nähe eines vorgegebenen Sollwertpunktes s der Regelung simuliert, um die Antwortzeit X1 und die Amplitude X2 des ersten Überschreitens des Sollwertes nach einer Sollwertvariation $\Delta s$ festzulegen und um die Empfindlichkeit X3 des Reglers festzulegen zur Ausschaltung einer Störung und der Beaufschlagung X4 der Betätigungsanordnung während einer zufälligen Störung der Anlage;

2) - es wird eine Optimierungsfunktion $F = a1.|X1|+a2.|X2|+a3.|X3|+a4.|X4|$ berechnet, in der a1, a2, a3, a4 Gewichtungsfaktoren für vorgegebene Regelkriterien sind und es wird als Regelwert für den Regler der Satz $(p°, i°)$ festgehalten, der dem Minimum dieser Funktion entspricht.

2. Verfahren nach Anspruch 1, dadurch gekennzeichnet, dass die Regelschleife außer der Anlage und dem Regler einen Fühler aufweist, um eine charakteristische Betriebsgröße m der Anlage zu messen und eine Betätigungsanordnung aufweist, um den Betrieb durchzuführen ausgehend von einem Steuersignal u und dass der Betrieb der Regelschleife gemäß den folgenden Schritten simuliert wird:

a) - für eine erste Regelung des Reglers basierend auf einem beliebigen Satz $(p_1, i_1)$, der zur Reihe der Regelungen gehört,

- wird in einem ersten Simulationsschritt der Schleife eine vorgegebene Sollwertvariation $\Delta s$ zugeführt und die Antwortzeit X1 auf diese Sollwertvariation $\Delta s$ gemessen, sowie die Amplitude X2 des ersten Überschreitens des neuen Sollwertes $s + \Delta s$,
- wird in einem zweiten Simulationsschritt eine zufällige Störung q der Anlage zugeführt und der mittlere quadratische Abstand X3 der Messung m des Fühlers (der die Empfindlichkeit der Nichtbeachtung der Störung durch den Regler darstellt) gemessen, sowie der mittlere quadratische Abstand X4 des Steuersignals u der Betätigungsanordnung (der die Beaufschlagung der Betätigungsanordnung darstellt);

b) - es werden diese Simulationsschritte und der Messchritt für alle anderen Sätze $(p_n, i_n)$ der Reihe von Regelungssätzen des Reglers wiederholt, wobei die Optimierungsfunktion die Form $F(p_n, i_n) = a1.|X1_n|+a2.|X2_n|+a3.|X3_n|+a4.|X4_n|$ annimmt unter Einbeziehung der Messungen $(X1_n, X2_n, X3_n, X4_n)$, die jedem der Sätze $(p_n, i_n)$ der Reihe der Regelungen des Reglers entsprechen.

3. Verfahren nach einem der Ansprüche 1 oder 2, dadurch gekennzeichnet, dass die Gewichtungsfaktoren a1, a2, a3, a4 normiert sind und der Bedeutung entsprechen, die nach Wunsch den folgenden Leistungs- oder Regelkriterien zugeordnet werden:

- für a1: die Antwortzeit
- für a2: die Amplitude des ersten Überschreitens des Sollwertes - für a3: die Nichtbeachtung der Störungen durch den Regler
- für a4: die Bedeutung der Beaufschlagungen der Betätigungsanordnung während einer Störung.

4. Verfahren nach einem der vorhergehenden Ansprüche, dadurch gekennzeichnet, dass die Anlage ein elektrischer Lichtbogenofen ist, der Elektroden und eine elektrische Speiseanordnung aufweist, um einen Lichtbogen, ausgehend von den Enden der Elektroden, zu erzeugen.

5. Verfahren nach Anspruch 4, dadurch gekennzeichnet, dass diese Regelschleife eine Betätigungsanordnung (A) aufweist, welche eine Anordnung zur Verschiebung der Elektroden enthält.

6. Verfahren nach Anspruch 5, dadurch gekennzeichnet, dass um die Rechenanordnung mit Hilfe der Theorien der linearen Automatik zu definieren, das Verhalten der Betätigungsanordnung für eine Modellfunktion wie folgt simuliert wird:

1) - es wird der Betätigungsanordnung (A) ein periodisches Steuersignal u sehr niedriger Frequenz zugeführt und die Verschiebegeschwindigkeit v der Elektroden gemessen;

2) - es wird von der charakteristischen Experimentalfunktion v = f(u) der Betätigungsanordnung (A) eine beschreibende Modellfunktion bestimmt mit linearen algebraischen Ausdrükken, die in der Lage ist, die charakteristische und durch den Wert einer Parameterreihe vorbestimmte Funktion darzustellen;

3) - es wird der Wert der Parameter dieser Modellfunktion durch Anpassung der Modellfunktion an die charakteristische Funktion bestimmt.

**Claims**

1. Method of controlling a plant having non-linear behaviour, especially an electric arc furnace, with the aid of an adaptive controller of the Proportional-Integral type forming part of a control loop, characterized in that the values of the proportionality parameter $p°$ and of the integration parameter $i°$ of the controller are set as follows:

1) for a predetermined series of sets (p, i) of possible settings of the controller, the operation of the control loop in the vicinity of a predetermined control setpoint s is simulated by computing means in order to identify the response time X1 and the amplitude X2 of the first overshoot of the setpoint after a setpoint variation $\Delta s$ and to identify the effectiveness X3 of the controller to eliminate a perturbation and the stress X4 of the actuator during a random perturbation of the plant;

2) an optimization function $F = a1.|X1| + a2.|X2| + a3.|X3| + a4.|X4|$ is computed, where a1, a2, a3 and a4 are weighting factors for the predetermined control criteria, and the set $(p°, i°)$ which corresponds to the minimum of this function is adopted as setting values for the controller.

2. Method according to Claim 1, characterized in that, the said control loop comprising, in addition to the plant and the said controller, a sensor for measuring a quantity rn characteristic of the operation of the said plant and an actuator for conducting the said operation based on a control signal u, the operation of the control loop is simulated according to the following sequences:

a) for a first setting of the controller based on any set $(p_1, i_1)$ belonging to the said series of settings,

- in a first simulation step, a predetermined setpoint variation $\Delta s$ is applied to the said loop and the response time X1 with respect to the said setpoint variation $\Delta s$ and the amplitude X2 of the first overshoot of the new setpoint $s + \Delta s$ are measured,

- in a second simulation step, a random perturbation q is applied to the said plant and the mean square deviation X3 of the measurement m by the said sensor (which represents the effectiveness of the elimination of the perturbation by the controller) and the mean square deviation X4 of the control signal u for the actuator (which represents the stress of the actuator) are measured;

b) the said simulation and measurement steps are reiterated for all the other sets $(p_n, i_n)$ of the said series of sets of settings of the controller, the said optimization function then being expressed in the form $F(p_n, i_n) = a1.|X1_n| + a2.|X2_n| + a3.|X3_n| + a4.|X4_n|$ by adopting the measurements $(X1_n, X2_n, X3_n, X4_n)$ corresponding to each of the sets $(p_n, i_n)$ of the said series of settings of the controller.

3. Method according to either of Claims 1 and 2, characterized in that the said weighting factors a1, a2, a3, a4 are standardized and correspond to the magnitude that it is desired to assign to the following control criteria or performance characteristics:

- in the case of a1 : the response time;
- in the case of a2 : the amplitude of the first setpoint overshoot;
- in the case of a3 : the elimination of the perturbations by the controller;
- in the case of a4 : the magnitude of the stresses of the actuator during a perturbation.

4. Method according to any one of the preceding claims, characterized in that the said plant is an electric arc furnace comprising electrodes and electrical supply means for creating an electric arc at the end of the electrodes.

**5.** Method according to Claim 4, characterized in that the said control loop includes an actuator (A) which includes means for moving the said electrodes.

**6.** Method according to Claim 5, characterized in that, in order to define the said computing means with the aid of the theories of linear automatic control, the behaviour of the said actuator is simulated by a model function determined as follows:

1) a periodic control signal u of very low frequency is applied to the actuator (A) and the speed of movement v of the said electrodes is measured;

2) based on the experimental function $v = f(u)$ characteristic of the actuator (A), a generic model function, of linear algebraic expressions, which is capable of representing the said characteristic function and is determined by the value of a series of parameters is determined;

3) the value of the parameters of this model function is determined by fitting the model function onto the characteristic function.

$\mathcal{P}$

$\rho$    $i$

s

$\varepsilon$

R

$u$

A

F

+

-

m

C

**Fig. 1**

$u$ périodique

$u$

D

$v = f(u)$

A

**Fig. 3**

Fig. 2

Fig. 4

**Fig. 5**

$$X_2 = \frac{x_2}{\Delta r^\circ}$$

**Fig. 6**

$X_3$= écart quadratique moyen de r

$X_4$= écart quadratique moyen de $u$

**Fig. 7**

**Fig. 8**

**Fig. 9**